# EUROPEAN PATENT SPECIFICATION

(11) **EP 0 939 211 B1**
(45) Date of publication and mention of the grant of the patent: **07.04.2004**
(21) Application number: 99101923.3
(22) Date of filing: 29.01.1999
(51) Int. Cl.: F02B 27/00, F02M 35/104

(54) **Inertia charge intake manifold for multi-cylinder internal combustion engine**
Resonanz-Saugrohranlage für Mehrzylinderbrennkraftmaschine
Collecteur d'admission du type à résonance pour moteur à plusieurs cylindres

(30) Priority: 27.02.1998 JP 4659598; 27.02.1998 JP 4659698; 27.02.1998 JP 4659798
(43) Date of publication of application: 01.09.1999
(73) Proprietor: Daihatsu Motor Co., Ltd., Ikeda-shi, Osaka (JP)
(72) Inventor: Kimoto, Yoshihiro c/o Daihatsu Motor Co., Ltd., Ikeda-shi, Osaka (JP); Munetoki, Hiroshi c/o Daihatsu Motor Co., Ltd., Ikeda-shi, Osaka (JP); Uotani, Daisuke c/o Daihatsu Motor Co., Ltd., Ikeda-shi, Osaka (JP); Nakajima, Mikio c/o Toyota Motor Corp., Toyota-shi, Aichi (JP)
(74) Representative: GROSSE BOCKHORNI SCHUMACHER

(56) References cited:
- EP-A- 0 355 960
- EP-A- 0 432 919
- EP-A- 0 523 028
- US-A- 4 619 226

## Description

### BACKGROUND OF THE INVENTION

### 1. Field of the Invention:

The present invention relates to an intake manifold in a multi-cylinder internal combustion engine wherein the manifold is designed to super-charge an air-fuel mixture by an inertia effect.

### 2. Description of the Related Art:

An inertia charge intake manifold includes a surge tank and a plurality of branch pipes for connecting the surge tank to the cylinder head of a multi-cylinder internal combustion engine. Each of the branch pipes needs to be relatively long for utilizing the inertia effect of the gas flow for super-charging. Further, all of the branch pipes need to be substantially equal in length for equalizing the inertia effect within the respective branch pipes.

JP-A-63(1988)-18178 discloses an inertia charge intake manifold which includes a surge tank located remote from the cylinder head of a multi-cylinder internal combustion engine, and a plurality of relatively long branch pipes connecting the surge tank to the cylinder head. The surge tank is located remote from the cylinder head to provide a long path for arranging the relatively long branch pipes without sharply bending.

However, since the surge tank is located remote from the cylinder head, the engine combined with the intake manifold becomes inevitably bulky. Further, difficulty arises in supporting the surge tank on the engine particularly in view of the fact that the surge tank itself must support other intake components such as a throttle body or carburetor which is relatively heavy. Indeed, a large tough support bracket may be necessary for this purpose, which results in an increase of cost and weight.

JP-A-4(1992)-76263 discloses an inertia charge intake manifold which comprises a surge tank disposed above the cylinder head of a multi-cylinder internal combustion engine, and a plurality of relatively long branch pipes connecting the surge tank to the cylinder head. Each of the branch pipes extends laterally outward from a longitudinal side surface of the cylinder head, is then bent upward, and is then bent laterally inward for connection to the surge tank.

However, since two different spaces are needed for arranging the surge tank and the plurality of branch pipes, the combination of the engine and the manifold is still bulky. Further, since the surge tank is located above the cylinder head, difficulty still remains with respect to supporting the surge tank because the top surface of the cylinder head is occupied by various components.

Document EP A 432 919 reveals an internal combustion engine inlet manifold which is formed by an upper casting and a lower casing which together form a housing which defines a plenum and a vacuum reservoir, four curved inlet tracks and an inlet port. These inlet tracks all have essentially the same length, but are all arranged in a single row extending parallel to the row of intake ports of the cylinder head. They do therefore have necessarily all the same distance to the engine and the surge tank must be elongated correspondingly, resulting in a large size.

Document EP 355 960 reveals an internal combustion engine inlet manifold having a plenum and a number of inlet tracks. These inlet tracks do have essentially the same length, however, they are parallel to each other and equidistant to the engine, therefore causing a bulky arrangement of the surge tank and the inlet manifold.

Document US 4, 619, 226 reveals an intake device for an engine with a plurality of separate intake passages branched from an elongated surge tank for introducing the intake air in the surge tank into cylinders through intake ports formed in a cylinder head 7.

However, these intake passages are on the one hand arranged in a parallel pattem, on the other hand, they do not have the same length. Therefore the intake manifold is bulky without having the above-described advantages resulting out of length equilization.

### SUMMARY OF THE INVENTION

It is, therefore, an object of the present invention to provide an intake manifold which is capable of eliminating or at least reducing the problems of the prior art described above.

In addition, it is preferable that the flow resistance within the intake manifold be reduced as much as possible while also providing even distribution of an air-fuel mixture to the respective cylinders.

Further, it is also preferable that a throttle body connected to the intake manifold be reduced in size as much as possible.

According to the present invention, there is provided an intake manifold in a multi-cylinder internal combustion engine, according to claim 1. In this respect the engine comprising a cylinder head provided with a plurality of intake ports at a longitudinal side surface; the manifold comprising a surge tank provided with an intake pipe, and a plurality of branch pipes connecting the surge tank to the respective intake ports of the cylinder head; characterized that the surge tank is disposed adjacent to the longitudinal side surface of the cylinder head; that the underside of the surge tank is provided with a plurality of connecting portions connected respectively to the branch pipes; that each of the branch pipes extends laterally outward from the longitudinal side surface of the cylinder head above the surge tank, is then bent downward to circumvent the surge tank, is then bent laterally inward to extend under the surge tank, and is then bent upward for connection to a respective one of the connecting portions of the surge tank, wherein the surge tank is disposed adjacent to the longitudinal side surface of the cylinder head at a central portion longitudinally of the engine. Further, at least one of the connecting portions of the surge tank is disposed closer to the engine and connected to a branch pipe extending from an intake port located closer to the longitudinal center of the engine, whereas at least another of the connecting portions is disposed farther from the engine and connected to a branch pipe extending from an intake port located farther from the longitudinal center of the engine. Moreover, said another connecting portion may preferably have an axis which is inclined relative to the axis of said one connecting portion in such a way that said another connecting portion is directed downwardly toward the corresponding intake port longitudinally of the engine.

With the above-described structure, each of the relatively long branch pipes is bent to substantially surround the surge tank which is disposed close to the longitudinal side surface of the cylinder head. Thus, compared with the previously described prior art, the manifold can be made much more compact, thereby providing a size reduction of the engine as a whole. Further, since the surge tank (to which a relatively heavy throttle body or carburetor is mounted) is disposed adjacent to the longitudinal side surface of the cylinder head, it may be easily supported or fixed on the engine with use of a bracket which is small, simple and light, so that the combination of the manifold and the engine as a whole may be rendered low in weight and cost.

Preferably, the surge tank may be disposed to partially enter under the cylinder head beyond the longitudinal side surface. Such an arrangement additionally simplifies the supporting structure for the manifold while realizing a further size reduction.

Preferably, the intake pipe may project upward from the upper surface of the surge tank at a position laterally offset outward from the center of the upper surface of the surge tank. Further, the connecting portions of the surge tank may be disposed at the respective corners of a polygon, and the intake pipe may be inclined or curved to have an axis directed toward the general'center of the polygon.

Preferably, the intake pipe may be flared to have a cross section which progressively increases toward the interior of the surge tank.

Preferably, the intake pipe of the surge tank may have an upper end fitted with a sealing O-ring, and the upper end of the intake pipe together with the O-ring is inserted into a socket bore of a throttle body. Further, the throttle body may be provided with a conduit for introducing blow-by gas or purging air, and the upper end of the intake pipe may be provided with at least one cutout in alignment with the conduit.

The present invention will now be described further, by way of example, on the basis of the preferred embodiment given with reference to the accompanying drawings.

### BRIEF DESCRIPTION OF THE DRAWINGS

In the accompanying drawings:
Fig. 1 is a fragmentary plan view showing a multi-cylinder internal combustion engine provided with an inertia charge intake manifold embodying the present invention;
Fig. 2 is a fragmentary front view showing the same intake manifold as seen in the direction of arrows II-II in Fig. 1;
Fig. 3 is a fragmentary side view showing the same intake manifold as seen in the direction of arrow III-III in Fig. 1;
Fig. 4 is a sectional view taken along lines IV-IV in Fig. 1;
Fig. 5 is a sectional view taken along lines V-V in Fig. 4;
Fig. 6 is a sectional view taken along lines VI-VI in Fig. 4;
Fig. 7 is a sectional view taken along lines VII-VII in Fig. 4; and
Fig. 8 is a sectional view similar to Fig. 7 but showing the same portion with parts separated apart.

### DETAILED DESCRIPTION OF THE PREFERRED EMBODIMENT

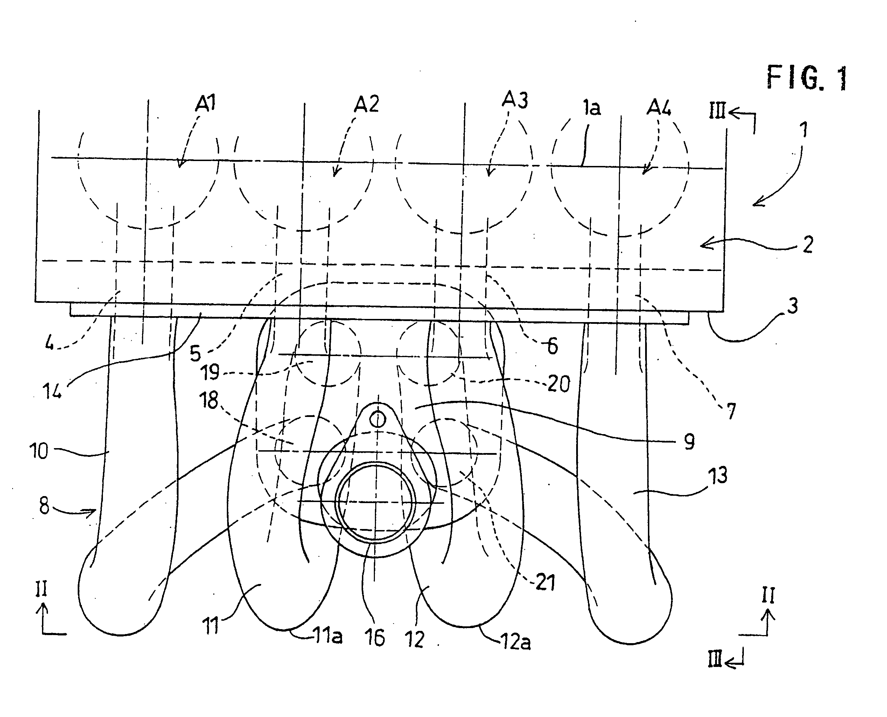

Figs. 1 to 3 of the accompanying drawings show a multi-cylinder internal combustion engine which incorporates an inertia charge intake manifold in accordance with an embodiment of the present invention. In the illustrated embodiment, the engine generally represented by reference numeral 1 includes four cylinders A1, A2, A3, A4 arranged in series along a crank shaft axis 1a. The bore axis of each cylinder may extend generally vertically, i.e., perpendicularly to the horizontal plane containing the crank shaft axis 1a. The engine 1 further includes a cylinder head 2 having a corresponding number of intake ports 4, 5, 6, 7 each communicating with a respective one of the cylinders A1-A4. Each of the intake ports 4-7 is outwardly open at one longitudinal side surface 3 of the cylinder head 2.

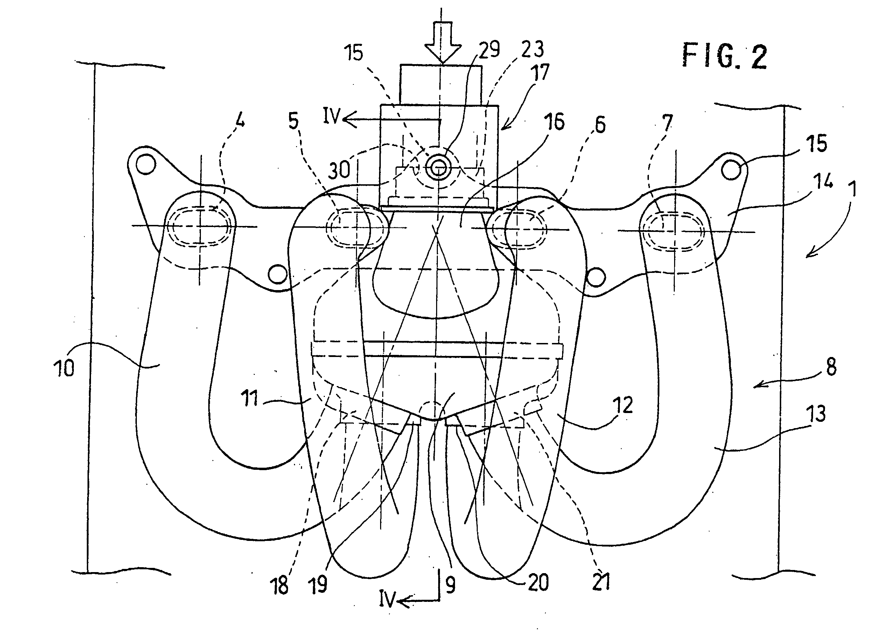

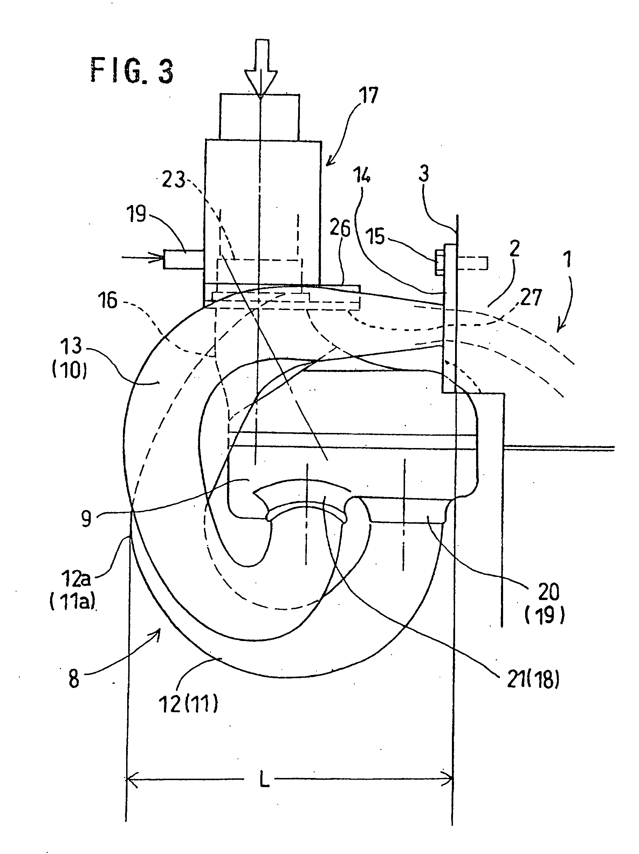

The cylinder head 3 or the engine 1 as a whole is associated with an intake manifold 8 which mainly includes a surge tank 9 and four relatively long branch pipes 10, 11, 12, 13. The surge tank 9 and the respective branch pipes 10-13 may be made of any suitable metal. Each of the branch pipes 10-13 is attached at one end to a common flange 14 which, in turn, is fixed to the longitudinal side surface 3 of the cylinder head 2 by bolts 15 (see Figs. 2 and 3). In this way, the branch pipes 10-13 are held in communication with the respective intake ports 4-7.

As best shown in Fig. 1, the surge tank 9 of the intake manifold 9 enters partially under the cylinder head 2 at a portion between the two centrally located cylinders A2, A3 (the second and third cylinders). In other words, the cylinder head 2 partially overlaps the surge tank 9 horizontally (see also Fig. 3). The amount of partial entry or overlap is represented by reference sign S in Figs. 1 and 3.

The surge tank 9 is integrally formed with an intake pipe 16 which projects upwardly from the upper surface of the surge tank 9 at a position offset laterally outward from the center thereof. The upper end of the intake pipe 16 is removably connected to a throttle body 17 which is internally provided with a throttle valve (not shown).

On the other hand, the underside of the surge tank 9 is formed with four connecting portions 18, 19, 20, 21 for connection to the respective branch pipes 10-13 which are generally equal in length. As best shown in Fig. 3, each of the branch pipes 10-13 extends laterally from the longitudinal side surface 3 of the cylinder head 2 over the surge tank 9, then is bent downward to extend at a side of the surge tank 9, then is bent inward to extend under the surge tank 9, and is finally bent upward for connection to a respective one of the connecting portions 18-21 of the surge tank 9.

As shown in the plan view of Fig. 1, the four connecting portions 18-21 at the underside of the surge tank 9 are located generally at the four corners of a square, rectangle or trapezoid, respectively. The two connecting portions 19, 20 disposed closer to the engine 1 are respectively connected to the two branch pipes 11, 12 extending respectively from the second and third cylinders A2, A3 located at the central portion of the cylinder series, whereas the other two connecting portions 18, 21 disposed farther from the engine 1 are respectively connected to the other two branch pipes 10, 13 extending respectively from the first and fourth cylinders A1, A4 located at both ends of the cylinder series.

In this way, each of the relatively long branch pipes 10-13 for connecting a respective one of the intake ports 4-7 (or the cylinders A1-A4) to a respective one of the connecting portions 18-21 of the surge tank 9 is bent to substantially surround the surge tank 9 which is disposed close to the longitudinal side surface 3 of the cylinder head 2. Thus, compared with the previously described prior art, the manifold 8 can be made much more compact.

In the illustrated embodiment, the surge tank 9 is arranged close to the engine 1 beyond the longitudinal side surface 3 of the cylinder head 2 in such a manner as to partially enter under the cylinder head 2 by the amount S. This structure additionally contributes to a size reduction of the manifold 8 combined with the engine 1.

Further, the four connecting portions 18-21 on the underside of the surge tank 9 are arranged respectively at the four corners of a square, rectangle or trapezoid while the surge tank 9 itself is disposed at a central portion of the engine 1 along the longitudinal axis 1a of the crank shaft. As a result, the length of the surge tank 9 along the longitudinal axis 1a of the crank shaft can be reduced.

According to the illustrated embodiment, the two connecting portions 19, 20 disposed closer to the engine 1 are respectively connected to the two branch pipes 11, 12 extending respectively from the second and third cylinders A2, A3 located at the central portion of the cylinder series, whereas the other two connecting portions 18, 21 disposed farther from the engine 1 are respectively connected to the other two branch pipes 10, 13 extending respectively from the first and fourth cylinders A1, A4 located at both ends of the cylinder series. Such a connecting arrangement is advantageous for the following reasons.

For enabling inertia charge of an air-fuel mixture, all of the four branch pipes 10-13 must be substantially equal in length. Therefore, each of the branch pipes 10-13 needs to extend along a respective bent path for meeting this requirement. Further, the two intake ports 5, 6 for the second and third cylinders A2, A3 are located closer to the surge tank 9 than the other two intake ports 4, 7 for the first and fourth cylinders A1, A4, whereas the two connecting portions 19, 20 of the surge tank 9 are located closer to the engine 1 than the other two connecting portions 18, 21.

On the above basis, it is hypothetically assumed that the two connecting portions 18, 21 disposed farther from the engine 1 are respectively connected to the two branch pipes 11, 12 extending respectively from the second and third cylinders A2, A3, whereas the other two connecting portions 19, 20 disposed closer to the engine 1 are respectively connected to the other two branch pipes 10, 13 extending respectively from the first and fourth cylinders A1, A4. In this case, the downwardly extending portions 11a, 12a (see Figs. 1 and 3) of the two branch pipes 11, 12 shift laterally outward by as much as the two connecting portions 18, 21 are located farther from the engine 1 than the other two connecting portions 19, 20. As a result, the laterally projecting length L (see Fig. 3) of the downwardly extending portions 11a, 12a of the two branch pipes 11, 12 becomes relatively large, thereby making the intake manifold 8 bulky.

In reality, however, the two connecting portions 19, 20 disposed closer to the engine 1 are actually connected to the two branch pipes 11, 12 extending from the second and third cylinders A2, A3, whereas the other two connecting portions 18, 21 disposed farther from the engine 1 are actually connected to the other two branch pipes 10, 13 extending from the first and fourth cylinders A1, A4. Therefore, the downwardly extending portions 11a, 12a of the two branch pipes 11, 12 shift laterally inward by as much as the two connecting portions 19, 20 are located closer to the engine 1 than the other two connecting portions 18, 21. As a result, the laterally projecting length L of the downwardly extending portions 11a, 12a of the two branch pipes 11, 12 is relatively small, thereby realizing compactness of the intake manifold 8 as a whole.

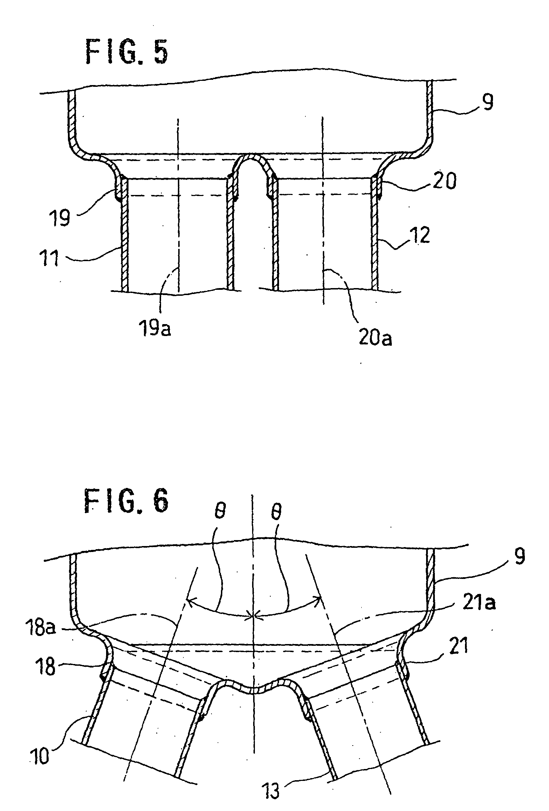

On the other hand, due to the above-described connecting arrangement of the four branch pipes 10-13, each of the two branch pipes 10, 13 extending from the first and fourth cylinders A1, A4 must be bent to enter a limited space between the surge tank 9 and a respective one of the other two branch pipes 11, 12 under the surge tank 9. Under this condition, the respective axes 19a, 20a of the two connecting portions 19, 20 connected to the branch pipes 11, 12 are oriented vertically as shown in Figs. 2 and 5, whereas the respective axes 18a, 21a of the other two connecting portions 18, 21 connected to the branch pipes 10, 13 are oriented obliquely at an angle θ as shown in Figs. 2 and 6. In other words, the two connecting portions 18, 21 connected to the branch pipes 10, 13 are inclined to be directed away from each other. Such inclined orientation of the connecting portions 18, 21 is desirable for the following reasons.

It is now assumed that the respective axes 18a, 21a of the two connecting portions 18, 21 connected to the branch pipes 10, 13 are vertically oriented substantially in parallel to the respective axes 19a, 20a of the two connecting portions 19, 20 connected to the branch pipes 11, 12. In this case, each of the two branch pipes 10, 13 needs to be bent sharply with a small curvature near the surge tank 9 for entering into the limited space between the surge tank 9 and a respective one of the other two branch pipes 11, 12. As a result, the flow resistance within the branch pipes 10, 13 inevitably increases, consequently providing a hindrance to gas feed. Further, a sharp bend of these branch pipes 10, 13 makes a manufacturing process difficult regardless of whether they are made of a metal or a resin.

In reality, however, the two connecting portions 18, 21 of the surge tank 9 are inclined at the angle θ to be directed away from each other for respective connection to the branch pipes 10, 13. Therefore, each of the two branch pipes 10, 13 does not need to be bent sharply for entering into the limited space between the surge tank 9 and a respective one of the other two branch pipes 11, 12. As a result, the flow resistance within the branch pipes 10, 13 may be kept relatively low. Further, these branch pipes 10, 13 may be manufactured relatively easily regardless of the material of which they are made.

As previously described, the intake pipe 16 of the surge tank 9 is provided at a position offset laterally outward from the center of the surge tank 9 (see Figs. 1 and 3). This offset arrangement of the intake pipe 16 is preferable for removably mounting the throttle body 17 to the intake pipe 16 without interfering with the engine 1.

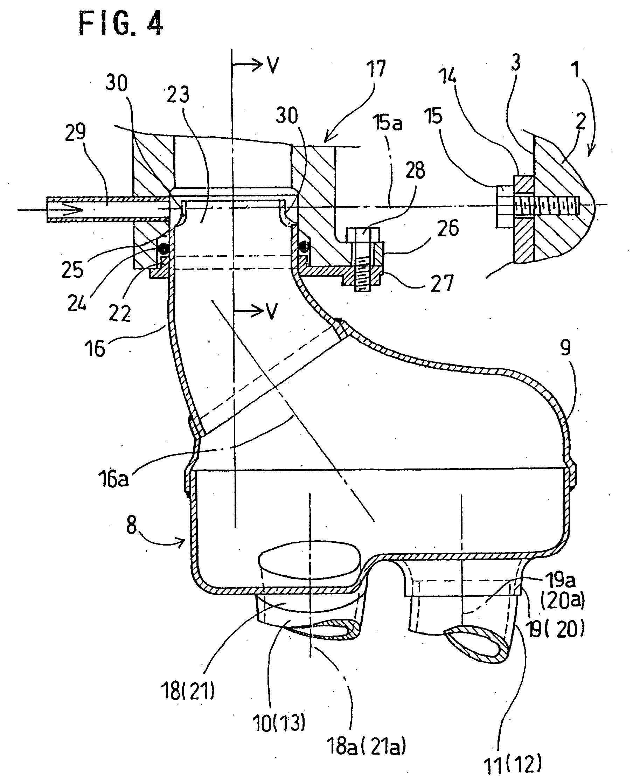

As shown in Figs. 3 and 4, the intake pipe 16 may be preferably inclined or curved in such a way that its axis 16a is directed toward the general center of the square, rectangle or trapezoid defined by the four connecting portions 18-21 of the surge tank 9. Such an orientation of the intake pipe 16 is advantageous for evenly distributing the air-fuel mixture to the four branch pipes 10-13 while also reducing the flow resistance against the air-fuel mixture. If the intake pipe 16 is arranged offset laterally outward but is not inclined or curved in this way, the air-fuel mixture supplied through the intake pipe 16 is unevenly distributed with respect to the four branch pipes 10-13, and a smooth gas flow within the surge tank 9 is hindered to result in an increase of the flow resistance.

Further, as also shown in Figs. 3 and 4, the intake pipe 16 may be preferably flared toward the interior of the surge tank 9 to have a progressively increasing cross section. This flaring configuration of the intake pipe 16 combined with the above-described orientation thereof is additionally advantageous for even distribution of the air-fuel mixture with respect to the different branch pipes 10-13 and for a flow resistance reduction.

As shown in Figs. 4, 7 and 8, the intake pipe 16 of the surge tank 9 has an upper end 23 provided with a flange 27 having a stepped portion 22, and a sealing O-ring 24 is fitted on the upper end 23 of the intake pipe 16 above the stepped portion. On the other hand, the throttle body 17 has a lower end formed with a socket bore 25 and a flange 26. In assembly, the upper end 23 of the intake pipe 16 together with the O-ring 24 and the stepped portion 22 of the flange 27 is fitted into the socket bore 25 of the throttle body 17, and both flanges 26, 27 are joined together by a bolt 28 for fixedly connecting the throttle body 17 to the intake pipe 16.

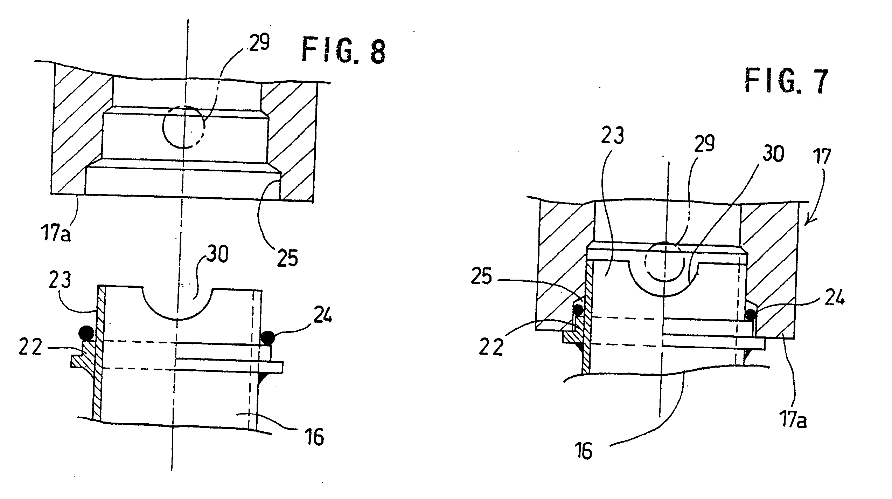

As also shown in Figs. 4, 7 and 8, the throttle body 17 is further provided with a conduit 29 for introducing blow-by gas from the cylinder head 2 of the engine 1 or purging air from a canister (not shown) at a position downstream from the non-illustrated throttle valve, whereas the upper end 23 of the intake pipe 16 of the manifold 8 is formed with a pair of cutouts 30 in alignment with the conduit 29. Since the cutouts 30 prevent the conduit 29 from being closed by the upper end 23 of the intake pipe 16, the position of the conduit 29 may be brought closer to the lower end face 17a (see Figs. 7 and 8) of the throttle body 17 by as much as the cutouts 30 allow. Thus, the length of the throttle body 17 can be correspondingly reduced.

Preferably, a central one.of the bolts 15 used for fixing the common flange 14 to the cylinder head 2 may have its axis 15a aligned with the pair of cutouts 30, as seen in Figs. 2 and 4. Thus, before mounting the throttle body 17 to the intake pipe 16 of the surge tank 9, the pair of cutouts 30 may be utilized for bringing a tightening tool into engagement with the central bolt 15 for purposes of fixing the common flange 14 to the cylinder head.

In the illustrated embodiment, the intake manifold 8 is connected to the cylinder head 2 of the four-cylinder internal combustion engine 1. However, the present invention is not limited to such an embodiment. For instance, the present invention may be applied to a three-cylinder internal combustion engine in which case the underside of a surge tank has three connecting portions located at the respective corners of an equilateral triangle with one side extending in parallel to the longitudinal axis of the cylinder head, or to a six-cylinder internal combustion engine in which case the underside of a surge tank has six connecting portions located at the respective corners of an equilateral hexagon with one side extending in parallel to the longitudinal axis of the cylinder head. Further, the intake manifold 8 as a whole may be made of a resin.

## Claims

1. An intake manifold in a multi-cylinder internal combustion engine, the engine (1) comprising a cylinder head (2) provided with a plurality of intake ports (4-7) at a longitudinal side'surface (3); the manifold (8) comprising a surge tank (9) provided with an intake pipe (16), and a plurality of branch pipes (10-13) connecting the surge tank (9) to the respective intake ports (4-7) of the cylinder head (3);
wherein the surge tank (9) is disposed adjacent to the longitudinal side surface (3) of the cylinder head (2),
wherein the underside of the surge tank (9) is provided with a plurality of connecting portions (18-21) connected respectively to the branch pipes (10-13),
wherein each of the branch pipes (10-13) extends laterally outward from the longitudinal side surface (3) of the cylinder head (2) above the surge tank (9), is then bent downward to circumvent the surge tank (9), is then bent laterally inward to extend under the surge tank (9), and is then bent upward for connection to a respective one of the connecting portions (18-21) of the surge tank (9), and
wherein the surge tank (9) is disposed adjacent to the longitudinal side surface (3) of the cylinder head (2) at a central portion longitudinally of the engine (1),
characterized that at least one of the connecting portions (18-21) of the surge tank (9) is disposed closer to the engine (1), at least another of the connecting portions (18-21) being disposed farther from the engine (1), said one connecting portion (19, 20) being connected to a branch pipe (11, 12) extending from an intake port (5, 6) located closer to the longitudinal axis of the engine (1), said another connecting portion (18, 21) being connected to . a branch pipe (10, 13) extending from an intake port (4, 7) located farther from the longitudinal axis of the engine (1).

2. The intake manifold according to claim 1, wherein the surge tank (9) is disposed to partially enter under the cylinder head (2) beyond the longitudinal side surface (3).

3. The intake manifold according to claim 1 or 2, wherein said another connecting portion (18, 21) has an axis (18a, 21a) which is inclined relative to the axis (19a, 20a) of said one connecting portion (19, 20) in such a way that said another connecting portion (18, 21) is directed downwardly toward the corresponding intake port (4, 7) longitudinally of the engine.

4. The intake manifold according to any one of claims 1 to 3, wherein the intake pipe (16) projects upward from the upper surface of the surge tank (9) at a position laterally offset outward from the center of the upper surface of the surge tank.

5. The intake manifold according to claim 4, wherein the connecting portions (18-21) of the surge tank (9) are disposed at the respective corners of a polygon, the intake pipe (16) being inclined or curved to have an axis (16a) directed toward the general center of the polygon.

6. The intake manifold according to claim 4 or 5, wherein the intake pipe (16) is flared to have a cross section which progressively increases toward the interior of the surge tank (9).

7. The intake manifold according to any one of claims 1 to 6, wherein the intake pipe (16) of the surge tank (9) has an upper end (23) fitted with a sealing O-ring (24), the upper end (23) of the intake pipe (16) together with the O-ring (24) being inserted into a socket bore (25) of a throttle body (17), the throttle body (17) being provided with a conduit (29) for introducing blow-by gas or purging air, the upper end (23) of the intake pipe (16) being further provided with at least one cutout (30) in alignment with the conduit (29) .

## Patentansprüche

1. Saugrohranlage in einem Mehrzylinder-Verbrennungsmotor, der Motor (1) einen mit einer Mehrzahl von Ansaugkanälen (4-7) an einer längslaufenden seitlichen Oberfläche (3) ausgestatteten Zylinderkopf (2) aufweisend; die Rohranlage (8) einen mit einem Saugrohr (16) und einer Mehrzahl von den Ausgleichsbehälter (9) mit den entsprechenden Ansaugkanälen (4-7) des Zylinderkopfs (3) verbindenden Zweigrohren (10-13) ausgestatteten Ausgleichsbehälter (9) aufweisend;
wobei der Ausgleichsbehälter (9) neben der längslaufenden seitlichen Oberfläche (3) des Zylinderkopfs (2) angeordnet ist,
wobei die Unterseite des Ausgleichsbehälters (9) mit einer Mehrzahl von mit den entsprechenden Zweigrohren (10-13) verbundenen Verbindungsabschnitten (18-21 ausgestattet ist,
wobei jeder der Zweigrohre (10-13) sich seitlich aus der längslaufenden seitlichen Oberfläche (3) des Zylinderkopfs (2) oberhalb des Ausgleichsbehälters (9) erstreckt, dann zum Umgehen des Ausgleichsbehälters (9) nach unten gebogen ist, dann zum sich unter dem Ausgleichsbehälter (9) Erstrecken seitwärts nach innen gebogen ist und dann zur Verbindung mit einem der entsprechenden Verbindungsabschnitte (18-21) des Ausgleichsbehälters (9) nach oben gebogen ist, und
wobei der Ausgleichsbehälter (9) neben der längslaufenden seitlichen Oberfläche (3) des Zylinderkopfs (2) an einem zentralen Abschnitt längs des Motors (1) angebracht ist,
**dadurch gekennzeichnet, dass**
zumindest einer der Verbindungsabschnitte (18-21) des Ausgleichsbehälters (9) näher an dem Motor (1) angeordnet ist, zumindest ein anderer der Verbindungsabschnitte (18-21) weiter von den Motor (1) angeordnet ist, der eine Verbindungsabschnitt (19, 20) mit einem sich von einem Ansaugkanal (5, 6), das sich näher an der längslaufenden Achse des Motors (1) befindet, erstreckenden Zweigrohr (11, 12) verbunden ist, der andere Verbindungsabschnitt (18, 21) mit einem sich von einem Ansaugkanal (4, 7), das sich weiter von der längslaufenden Achse des Motors (1) befindet, erstreckenden Zweigrohr (10, 13) verbunden ist.

2. Saugrohranlage nach Anspruch 1, wobei der Ausgleichsbehälter (9) zum teilweise Eintreten unter dem Zylinderkopf (2) über die längslaufende seitliche Oberfläche (3) hinaus angeordnet ist.

3. Saugrohranlage nach einem der Ansprüche 1 oder 2, wobei der andere Verbindungsabschnitt (18, 21) eine Achse (18a, 21a) besitzt, welche relativ zu der Achse (19a, 20a) des einen Verbindungsabschnitts (19, 20) derart schief steht, dass der andere Verbindungsabschnitt (18, 21) in Richtung des entsprechenden Ansaugkanals (4, 7) längs des Motors nach unten gerichtet ist.

4. Saugrohranlage nach einem der Ansprüche 1 bis 3, wobei das Saugrohr (16) oberhalb der oberen Oberfläche des Ausgleichsbehälters (9) an einer von dem Zentrum der oberen Oberfläche des Ausgleichsbehälters seitwärts nach außen versetzten Position herausragt.

5. Saugrohranlage nach Anspruch 4, wobei die Verbindungsabschnitte (18-21) des Ausgleichsbehälters (9) an den entsprechenden Ecken eines Polygons angeordnet sind und das Saugrohr (16) schief oder gekrümmt ist, um eine zu dem Hauptzentrum des Polygons gerichtete Achse (16a) zu besitzen.

6. Saugrohranlage nach einem der Ansprüche 4 oder 5, wobei das Saugrohr (16) trichterförmig ist, um einen in Richtung des Inneren des Ausgleichsbehälters (9) sich stetig vergrößernden Querschnitt zu erhalten.

7. Saugrohranlage nach einem der Ansprüche 1 bis 6, wobei das Saugrohr (16) des Ausgleichsbehälters (9) ein mit einem abdichtenden O-Ring (24) ausgestattet oberes Ende (23) aufweist, das obere Ende (23) des Saugrohrs (16) zusammen mit dem O-Ring (24) in eine Muffenbohrung (20) eines Drosselkörpers (17) eingeführt wird, der Drosselkörper (17) mit einer Leitung (29) zum Einführen von Verbrennungsgas oder Ablassluft ausgestattet ist und das obere Ende (23) des Saugrohrs (16) weiterhin mit mindestens einer Aussparung (30) in Übereinstimmung mit der Leitung (29) ausgestattet ist.

## Revendications

1. Collecteur d'admission pour un moteur à combustion interne à plusieurs cylindres, le moteur (1) comprenant une culasse (2) comportant une pluralité d'orifices d'admission (4-7) dans une surface du côté longitudinal (3), le collecteur (8) comprenant un réservoir d'équilibre ou en tampon (9) pourvu d'un tube d'admission (16), et une pluralité de tubes de branchement (10-13) reliant le réservoir d'équilibre (9) aux orifices d'admission respectifs (4-7) de la culasse (2) ;
dans lequel le réservoir d'équilibre (9) est adjacent à la surface du côté longitudinal (3) de la culasse (2) ;
dans lequel la face inférieure du réservoir d'équilibre (9) présente une pluralité de parties de connexion (18-21) raccordées respectivement aux tubes de branchement (10-13) ;
dans lequel chacun des tubes de branchement (10-13) s'étend latéralement vers l'extérieur à partir de la surface du côté longitudinal (3) de la culasse (2), au-dessus du réservoir d'équilibre (9), il est ensuite courbé vers le bas de manière à contourner le réservoir d'équilibre (9), il est ensuite courbé latéralement vers l'intérieur de manière à s'étendre sous le réservoir d'équilibre (9), et il est ensuite courbé vers le haut pour raccordement à une partie respective des parties de connexion (18-21) du réservoir d'équilibre (9), et
dans lequel le réservoir d'équilibre (9) est adjacent à la surface du côté longitudinal (3) de la culasse (2), dans une partie longitudinalement centrale du moteur (1),
**caractérisé en ce qu'**au moins une des parties de connexion (18-21) du réservoir d'équilibre (9) est disposée plus près du moteur (1), au moins une autre des parties de connexion (18-21) étant disposée plus loin du moteur (1), la dite une partie de connexion (19,20) étant raccordée à un tube de branchement (11,12) s'étendant à partir d'un orifice d'admission (5,6) placé plus près de l'axe longitudinal du moteur (1), la dite autre partie de connexion (18-21) étant raccordée à un tube de branchement (10,13) partant d'un orifice d'admission (4,7) placé plus loin de l'axe longitudinal du moteur (1).

2. Collecteur d'admission selon la revendication 1, dans lequel le réservoir d'équilibre (9) est disposé de manière à entrer en partie sous la culasse (2) au-delà de la surface du côté longitudinal (3).

3. Collecteur d'admission selon la revendication 1 ou 2, dans lequel la dite une autre partie de connexion (18, 21) a un axe (18a, 21a) qui est incliné par rapport à l'axe (19a, 20a) de la dite une partie de connexion (19, 20) d'une manière telle que la dite une autre partie de connexion (18, 21) est dirigée vers le bas, vers l'orifice d'admission correspondant (4, 7) dans la direction longitudinale du moteur.

4. Collecteur d'admission selon une quelconque des revendications 1 à 3, dans lequel le tube d'admission (16) fait saillie vers le haut à partir de la surface supérieure du réservoir d'équilibre (9), à une position latéralement décalée vers l'extérieur par rapport au centre de la surface supérieure du réservoir d'équilibre.

5. Collecteur d'admission selon la revendication 4, dans lequel les parties de connexion (18-21) du réservoir d'équilibre (9) sont disposées aux angles respectifs d'un polygone, le tube d'admission (16) étant incliné ou incurvé de façon à avoir un axe (16a) dirigé vers le centre général du polygone.

6. Collecteur d'admission selon la revendication 4 ou 5, dans lequel le tube d'admission (16) est évasé de manière à avoir une section transversale qui augmente progressivement vers l'intérieur du réservoir d'équilibre (9).

7. Collecteur d'admission selon une quelconque des revendications 1 à 6, dans lequel le tube d'admission (16) du réservoir d'équilibre (9) comporte une extrémité supérieure (23) équipée d'un joint torique d'étanchéité (24), l'extrémité supérieure (23) du tube d'admission (16) munie du joint torique (24) étant insérée dans un emboîtement (25) d'un corps d'accélérateur (17), le corps d'accélérateur (17) étant pourvu d'un conduit (29) pour l'introduction de gaz de balayage ou d'air de chasse, l'extrémité supérieure (23) du tube d'admission (16) comportant en outre au moins une découpe (30) en alignement avec le conduit (29).
